# EUROPÄISCHE PATENTANMELDUNG

(11) **EP 3 958 449 A1**
(43) Veröffentlichungstag der Anmeldung: **23.02.2022**
(21) Anmeldenummer: 20191514.7
(22) Anmeldetag: 18.08.2020
(51) Int. Cl.: H02K 15/12, H01F 27/02, H01F 41/00

(54) **VORRICHTUNG UND VERFAHREN ZUR ISOLATION EINES EIN- ODER MEHRLAGIGE WICKLUNGEN TRAGENDEN KÖRPERS, SOWIE ELEKTRISCHE MASCHINE**

(71) Anmelder: Siemens Aktiengesellschaft, 80333 München (DE)
(72) Erfinder: Katzenberger, Tobias, 97631 Bad Königshofen STT Untereßfeld (DE); Plochmann, Bastian, 91413 Neustadt an der Aisch (DE)

(57) **Zusammenfassung**

Die Erfindung betrifft eine Vorrichtung und ein Verfahren zur Isolation eines ein- oder mehrlagige Wicklungen tragenden Körpers einer elektrischen Maschine, sowie eine elektrische Maschine mit einer derartigen Isolation. Die Erfindung eröffnet erstmals eine Möglichkeit zur Erhöhung der Fließgeschwindigkeit eines Reaktivharzes während des Imprägnierung, ohne durch chemische Zusätze die Viskosität, die Toxizität und/oder durch Temperaturerhöhung die Vernetzung und/oder durch Druckerhöhung die Volatilität des Gesamtsystems nachteilig zu beeinflussen. Vielmehr werden genau die Eigenschaften des Systems, elektrische Leitfähigkeit der umgebenden Gehäuse und Dielektrizität des Reaktivharzes hier gewinnbringend eingesetzt, ohne fertigungstechnische Nachteile dabei in Kauf nehmen zu müssen.

## Beschreibung

Die Erfindung betrifft eine Vorrichtung und ein Verfahren zur Isolation eines ein- oder mehrlagige Wicklungen tragenden Körpers einer elektrischen Maschine, sowie eine elektrische Maschine mit einer derartigen Isolation.

Elektrische Maschinen, wie Elektromotoren werden mittels gewickelten Rund-Lackdrähten hergestellt, welche nach dem Wickelprozess in das Statorblechpaket eingezogen werden. Der Drahtlack entspricht im Anwendungsbereich der Niederspannungsmotoren, z.B. bis 1kV, der Hauptisolation. Nichtsdestotrotz wird zur weiteren mechanischen Verfestigung sowie zur Passivierung vor äußeren Einflüssen üblicherweise eine weitere Imprägnierung, respektive ein Verguss, durchgeführt.

Eine Herstellung elektrischer Maschinen, beispielsweise Motoren, gelingt meist mit mehreren Fertigungsschritten. Ein Stator wird z. B. nach einem Einziehen von Wicklungen und einem Einbringen von Phasentrennern, Nutisolation und Nutverschluss einem Imprägnierverfahren unterzogen, welches herkömmlicherweise mittels eines heißhärtenden Imprägnierharzes bewerkstelligt wird.

Insbesondere im Bereich kleinerer Motoren wird häufig ein Imprägnierverfahren angewendet, bei welchem der Motor durch ein Harz aufweisendes Becken, auch Harzbecken genannt, gezogen wird. Kleinere Motoren sind hierbei beispielsweise Motoren mit einer Achshöhe 63 bis hin zu einer Achshöhe 160, wobei die Achshöhe das Maß vom Motorstandfuß bis zur Mitte einer Rotationsachse in mm ist.

Fertigungstechnisch ist die Imprägnierung oftmals ein Nadelöhr, da es sich prozessbedingt um einen aufwändigen Vorgang handelt, in dem flüssiges Reaktivharz, z.B. Epoxyharz und/oder Polyesterharz in das Statorblechpaket eingebracht wird. Dies geschieht beispielsweise durch Tauchen, Tauchrollieren und/oder Träufeln.

Regelmäßig ist dabei die größte Herausforderung ein Imprägniermittel so zu wählen, das den isolationstechnischen Anforderungen genügt, aber auch innerhalb einer möglichst kurzen Verweilzeit einerseits als dünnflüssiges Imprägniermittel gasfrei und ohne Porenbildung in die Ritzen, und Falten der Wicklung einfließt und andererseits dort beim Übergang zum nächsten Prozessschritt - beispielsweise beim Herausholen des Statorblechpakets aus dem Harzbecken - in der Wicklung gehalten wird, also idealerweise wenig oder gar nicht aus der Wicklung wieder heraus fließt.

Nach dem Stand der Technik wird dazu ein Beschleuniger, respektive Katalysator der die Polymerisation des Imprägniermittels in Gang setzt, so gewählt, dass das Imprägniermittel zunächst noch dünnflüssig - also niedrig viskos - vorliegt, in alle Ritzen der Wicklung einfließt und dann aber unter den Bedingungen der Imprägnierung schnell polymerisiert und zumindest oberflächlich soweit angeliert, dass das Imprägniermittel in der Wicklung hängen bleibt, insbesondere auch gegen die Schwerkraft beim Herausholen des Statorblechpakets aus dem Harzbecken.

Zwar ist aus der EP20159310 (noch unveröffentlicht) ein Verfahren zum Imprägnieren, Verfestigen oder Elektroisolieren eines ein- oder mehrlagige Wicklungen tragenden Körpers, insbesondere für eine elektrische Maschine, bekannt, wobei der die Wicklungen tragende Körper in ein mehrkomponentiges Harzsystem getaucht wird oder mit dem mehrkomponentigen Harzsystem beträufelt wird oder mit dem mehrkomponentigen Harzsystem besprüht wird, wobei insbesondere beim Rollieren und/oder Besprühen und/oder Beträufeln der Einsatz eines 2K - eines zweikomponentigen - bevorzugt ist. Durch dieses Verfahren ist eine Imprägnierung und anschließende Gelierung des Harzes bei nahezu Raumtemperatur oder geringfügig demgegenüber erhöhter Temperatur - z.B. bei 60°C - möglich.

Dabei ist insbesondere bevorzugt, dass durch die Rotation des Körpers ein Abtropfen des Harzsystems verhindert wird. Durch vorhandene Kapillarkräfte wird das Harz in die Nuten gezogen und geliert dort innerhalb weniger Minuten. Eine Tropffreiheit soll nach max. 20 min erreicht sein. Der Körper kann ohne lange aushärten und/oder abkühlen zu müssen, von der Rollier-Station entnommen werden und weiterbearbeitet werden.

Nachteilig an dieser Ausführungsform ist jedoch, dass bei dem Verfahren niedrige Temperaturen vorliegen, so dass das Reaktivharz, also das Harz bei dem die beiden Komponenten schon gemischt sind, relativ hohe Viskosität hat und dementsprechend das Fließverhalten, insbesondere in horizontaler Richtung in die teilweise mehrere 100 mm langen Nuten, durch Kapillarkräfte gehemmt ist.

Die, vergleichsweise zu anderen Verfahren mit höheren Temperaturen, geringeren Kapillarkräfte verursachen längere Prozesszeiten, also eine längere Zeit, bis eine definierte Menge Reaktivharz auf das Statorblechpaket mit der Wicklung appliziert ist, so dass die Masse tropffrei in das rollierende Statorblechpaket durch Kapillarkräfte gesogen wird.

Aufgabe der vorliegenden Erfindung ist daher, eine Vorrichtung und ein Verfahren anzugeben, mit dem diese Prozesszeit optimiert werden kann.

Diese Aufgabe wird durch den Gegenstand der vorliegenden Erfindung, wie er in den Ansprüchen, der Figur und der Beschreibung offenbart wird, gelöst.

Lösung der Aufgabe ist dementsprechend eine Vorrichtung zum Imprägnieren, Verfestigen oder Elektroisolieren eines ein- oder mehrlagige Wicklungen tragenden Körpers, wobei Gleichspannung zwischen Wicklung und Körper angelegt ist, so dass der die Wicklungen tragende Körper einerseits und die Wicklungen andererseits wie die beiden Elektroden eines Kondensators fungieren und ein flüssiges Dielektrikum ansaugen. Außerdem ist Gegenstand der vorliegenden Erfindung ein Verfahren zum Imprägnieren einer ein- oder mehrlagige Wicklungen tragenden Körpers einer elektrischen Maschine, wobei der Wicklungen tragende Körper in ein mehrkomponentiges Reaktivharzbecken getaucht wird oder mit dem mehrkomponentigen Reaktivharz beträufelt oder besprüht wird, wobei zwischen den Wicklungen und dem die Wicklungen tragenden Körper während des Imprägnierens eine Gleichspannung derart angelegt wird, dass zumindest 300V/mm, bevorzugt 500V/mm und insbesondere zwischen 500V/mm und 4000V/mm dazwischen liegen.

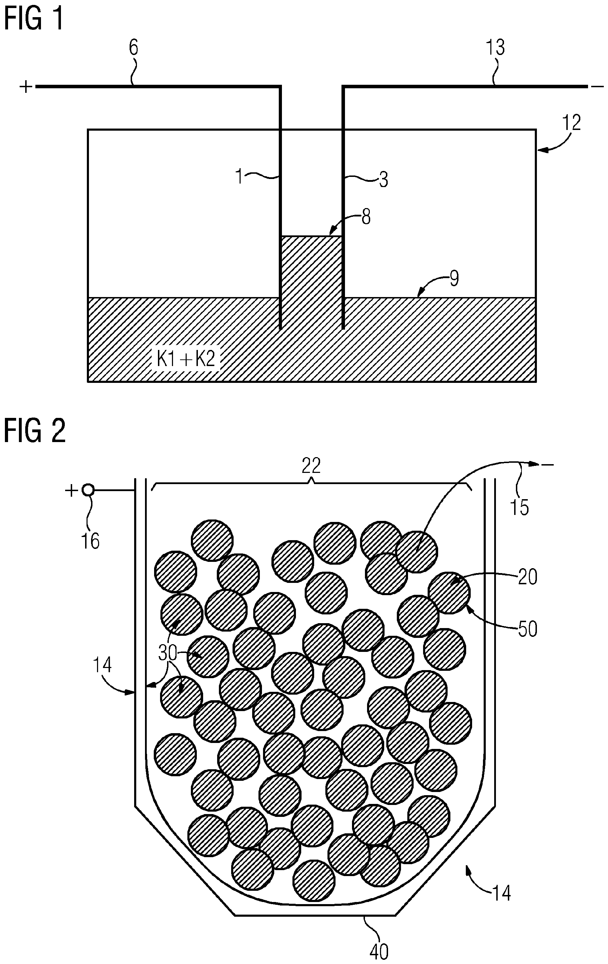

Allgemeine Erkenntnis der Erfindung ist es, dass flüssige und unvernetzte Reaktivharze elektrisch isolierende Flüssigkeiten sind, die regelmäßig, aber dem Wert nach abhängig von molekularer Kettenlänge und Beschaffenheit, elektrischen Dipolcharakter besitzen. Bekannt ist, dass elektrisch isolierende Flüssigkeiten durch Kapillarkräfte in ein elektrisches Feld hineingesaugt werden. Wie im Versuch- siehe Figur 1 - mit Hilfe eines einfachen Platten-Kondensators nachgestellt, wird zwischen den Platten ein erheblich höherer Flüssigkeitsstand erzeugt als außerhalb des durch die Platten erzeugten elektrischen Feldes.

In Figur 1 wird der entsprechende Versuch schematisch wiedergegeben, bei dem dieser einfachste Aufbau eines Kondensators in einer Wanne mit einem Reaktivharz "K1 +K2" als flüssigem Dielektrikum gezeigt ist. Anstelle der Wanne steht gemäß der Erfindung z.B. das Harzbecken und anstelle der beiden Platten wird die Wicklung einerseits und der die Wicklung tragende Körper andererseits, eingesetzt. Diese sind beim Kontakt mit dem flüssigen Reaktivharz gegenpolig angeschlossen. Das wird - als Querschnittsansicht in eine mit Wicklung gefüllte Nut - in Figur 2 gezeigt. Dabei entsteht der gewünschte Effekt, dass sich elektrostatische Kapillarkräfte entwickeln, die das Reaktivharz in die unzugänglichen Hohlräume und/oder Ritzen saugen, damit eine möglichst vollständige Imprägnierung der Wicklung in den Nuten erfolgt.

Als Reaktivharz sind alle Arten von fertig gemischten Imprägniermittel einsetzbar, die in flüssigem Zustand eine höhere Dielektrikumszahl haben als Luft.

Flüssige unvernetzte Reaktivharze sind elektrisch isolierende Flüssigkeiten und besitzen, je nach molekularer Kettenlänge und Beschaffenheit, elektrischen Dipolcharakter. Aus fertigungstechnischen Messung ist bekannt, dass z.B. ungesättigte Polyesterharze bei 50Hz eine Dielektrizitätszahl von ca. 6 bis 10 besitzen. Somit handelt es sich dabei um ein flüssiges Dielektrikum.

Ein Effekt von flüssigen, also fließfähigen, Dielektrika sowie kapazitiven Aufbauten ist eine Fließkraft in der Flüssigkeit, welche versucht, das flüssige Dielektrikum in einen Kondensator zu saugen, sobald dieser geladen wird und der Kondensatorzwischenraum mit einem Dielektrikum niedriger Dielektrizitätszahl gefüllt ist, wie z.B. mit Luft, deren Dielektrizitätszahl = 1 ist.

Der Kern der Erfindung ist die Nutzung der dielektrischen Kraft, um das Einfließen des Flüssigharzes in den Stator zu begünstigen und beschleunigen. Es wird demgemäß zwischen der Wicklung, dem Nutkasten und dem Blechpaket oder gegebenenfalls auch zwischen verschiedenen Wicklungen, ein elektrostatisches Feld erzeugt werde, so dass der Kondensatoreffekt entsteht.

Beispielsweise wird bei der rollierenden Imprägnierung mittels eines Schleifkontaktes das rollierende Statorblechpaket auf Spannung, also auf hohes Potential zur Erde, gebracht. Dabei dienen die eingezogenen Wicklungen, welche primär durch Drahtlack und sekundär durch die Nutkästen vom Blechpaket elektrisch isoliert sind, als offene Erde mit so genanntem schwebendem Potential. Dadurch ist ein kapazitiver Aufbau zwischen Wicklung und Statorblechpaket realisierbar, dergestalt, dass jeweils ein radiales elektrisches Feld von der gefüllten Nut aus in Richtung Statorblechpaket erzeugt wird, also insbesondere so, dass der Fließbereich des flüssigen Reaktivharzes eingeschlossen ist.

Das erzeugte elektrische Feld bewirkt eine elektrostatische Kapillarkraft, welche das flüssige Reaktivharz in die sonst mit Luft gefüllten Nutbereiche zieht.

Als "mehrlagige Wicklungen tragender Körper" wird vorliegend insbesondere ein Statorblechpaket bezeichnet. Ein derartiger Körper ist in der Regel und gemäß der vorliegenden Erfindung aus elektrisch leitfähigem Material, beispielsweise aus Blech, Eisen etc. Vorzugsweise weist der Körper Nuten auf, in die die primär isolierten Drähte als Wicklung eingezogen werden. Diese Wicklung wird dann -beispielsweise innerhalb des so genannten Nutkasten aus Flächenisolierstoff, z.B. gefalztem Papier etc., - in der Nut durch komplett-Verguss mit Imprägniermittel elektrisch isoliert. Diese zweite Isolation - um die sich die Erfindung dreht - nennt man auch sekundär-Isolation.

Die Güte der sekundär-Isolation hängt maßgeblich von der vollständigen Füllung der mit Wicklung gefüllten Nuten mit Imprägniermittel ab. Lufteinschlüsse und/oder Poren sind dabei besonders schadhaft und Ziel der Erfindung ist es, Lufteinschlüsse in der sekundär-Isolation möglichst vollständig zu vermeiden. Deshalb werden beispielsweise Nut und Wicklung gegenpolig angeschlossen, bevor sie in ein Harzbecken eingetaucht werden.

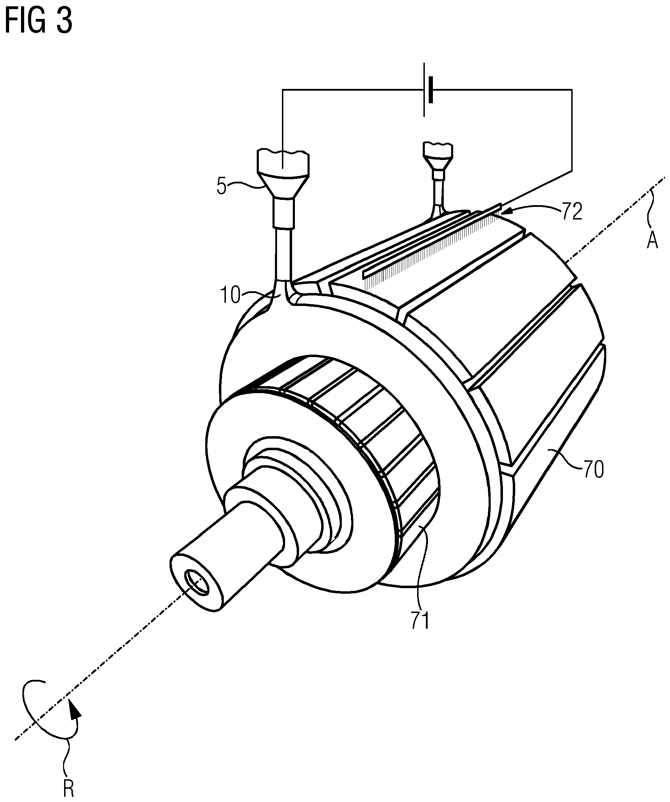

Bei einer rotierenden oder rollierenden Anlage ist ein einfaches Anschließen nicht möglich, deshalb wird hier vorgeschlagen, beispielsweise mit einem Kohlebesen, - siehe Figur 3 - der sich vorzugsweise über das gesamte Statorblechpaket erstreckt, da die Bleche untereinander isoliert sind, die Kontaktierung des Statorblechpakets vorzunehmen.

Als "Wicklung" werden Leiter in Form von Drähten bezeichnet, die beispielsweise in Form von so genannten "wilden Wicklungen" und/oder geordnet als Einzeldrähte oder in Bündeln, jeweils mit einer Primärisolation versehen, in die Nuten eines Statorblechpakets eingezogen werden.

Die Wicklung umfasst Drähte wie beispielsweise Kupfer-Drähte in gegeneinander bereits primär isolierter Form, wobei beispielsweise ein Drahtlack eine übliche Primärisolation darstellt.

In einer vorteilhaften Ausführungsform der Erfindung wird der die Wicklungen tragende Körper bei Raumtemperatur in das mehrkomponentige Harzsystem getaucht oder mit dem mehrkomponentigen Harzsystem beträufelt oder mit dem mehrkomponentigen Harzsystem besprüht.

Der Körper ist vorteilhaft ein Motor oder Generator oder ein Transformator. Der Motor/Generator weist vorteilhaft einen Rotor und einen Stator auf.

Der Körper kann auch ein Stator oder ein Rotor sein.

In einer vorteilhaften Ausführungsform der Erfindung wird der die Wicklungen tragende Körper bei einer Umgebungstemperatur von 15 bis 25°C, insbesondere 20 bis 23°C, in das mehrkomponentige Harzsystem getaucht oder mit dem mehrkomponentigen Harzsystem beträufelt oder mit dem mehrkomponentigen Harzsystem besprüht.

In einer weiteren vorteilhaften Ausführungsform der Erfindung wird der die Wicklungen tragende Körper auf eine Temperatur von 30 bis 80°C, insbesondere 30 bis 60°C, vorgewärmt. Vorzugsweise wird der die Wicklungen tragende Körper auf eine Temperatur von 30 bis 80°C, insbesondere 30 bis 60°C, induktiv vorgewärmt.

Dies hat den Vorteil, dass unterschiedliche Umgebungstemperaturen, z. B. im Sommer oder Winter, keinen Einfluss auf das Imprägnieren, Verfestigen oder Elektroisolieren haben.

Der die Wicklungen tragende Körper weist umgebungstemperaturunabhängig zu Beginn des Verfahrens zur Imprägnierung eine definierte Temperatur auf und kühlt dann ab.

In einer weiteren vorteilhaften Ausführungsform der Erfindung weist das mehrkomponentige Harzsystem wenigstens zwei Komponenten auf, wobei eine erste Komponente ein Harz ist, wobei eine zweite Komponente ein Härter ist.

Ein erstes Beispiel: Die erste Komponente, insbesondere ein Harz, weist vorzugsweise eine Viskosität von 2000 bis 2500 mPa·s bei einer Umgebungstemperatur von 25°C auf und eine Dichte von 1,13 bis 1,17 g/ml bei einer Umgebungstemperatur von 20°C. Die zweite Komponente, insbesondere ein Härter, weist vorzugsweise eine Viskosität von 40 bis 60 mPa·s, insbesondere 50 mPa·s, bei einer Umgebungstemperatur von 25°C auf und eine Dichte von 0,98 bis 1,00 g/ml bei einer Umgebungstemperatur von 20°C. Ein Teile-nach-Gewicht-Mischungsverhältnis liegt vorteilhaft bei 100 Teilen Harz zu 20 Teilen Härter. Ein Teile-nach-Volumen-Mischungsverhältnis liegt vorteilhaft bei 100 Teilen Harz zu 23 Teilen Härter. Eine Topfzeit bei Raumtemperatur für 100 g des gemischten Materials liegt vorteilhaft zwischen 20 und 40 min, vorzugsweise 30 min.

Ein zweites Beispiel: Die erste Komponente, insbesondere ein Harz, weist vorzugsweise eine Viskosität von 2400 bis 2600 mPa·s, 2500 mPa·s, bei einer Umgebungstemperatur von 25°C auf und ein spezifisches Gewicht von 1,13 bis 1,17 g/cm³, insbesondere 1,15 g/cm³. Die zweite Komponente, insbesondere ein Härter, weist vorzugsweise eine Viskosität von 200 bis 200 mPa·s, 300 mPa·s, bei einer Umgebungstemperatur von 25°C auf und ein spezifisches Gewicht von 1,00 bis 1,04 g/cm³, insbesondere 1,02 g/cm³. Ein Teile-nach-Gewicht-Mischungsverhältnis liegt vorteilhaft bei 5 Teilen Harz zu 1 Teil Härter. Ein Teile-nach-Volumen-Mischungsverhältnis liegt vorteilhaft bei 4,3 Teilen Harz zu 1 Teil Härter. Das gemischte Material weist vorzugsweise eine Viskosität von 1550 bis 1750 mPa·s, 1650 mPa·s, bei einer Umgebungstemperatur von 25°C auf und ein spezifisches Gewicht von 1,11 bis 1,15 g/cm³, insbesondere 1,13 g/cm³. Eine Gelierzeit bei 25°C liegt vorteilhaft zwischen 25 und 45 min, vorzugsweise 35 min.

Das mehrkomponentige Harzsystem ist vorzugsweise hochreaktiv. Das mehrkomponentige Harzsystem ist vorzugsweise ein 2K-Harzsystem, gegebenenfalls mit weiteren üblichen Additiven.

Vorzugsweise weist die zweite Komponente eine Viskosität von 40 bis 300 mPa·s bei einer Umgebungstemperatur von 25°C auf.

In einer weiteren vorteilhaften Ausführungsform der Erfindung ist das Harz ein Epoxid- oder ein Silikonharz, wobei der Härter ein Härter auf Aminbasis ist.

Der Amin basierte Härter bringt den Vorteil mit sich, dass die Aushärtung bei Zimmertemperatur erfolgen kann, auch Kalthärtung genannt. Beispielsweise Epoxidharz ist aufgrund seiner ausgeprägten mechanischen Eigenschaften vorteilhaft und hat nur eine kleine Volumenänderung während des Aushärtens zur Folge. Epoxidharz beinhaltet vorteilhaft keine Lösemittel und weist ein VOC < 1% auf (volatile organic compounds, kurz VOC), d.h. es dampfen weniger als 1 Gew.-% des gesamten Materials im Laufe des Härtungsvorgangs ab.

In einer weiteren vorteilhaften Ausführungsform rotiert der Körper um eine Achse, wenn der Körper in ein mehrkomponentiges Harzsystem getaucht wird oder mit dem mehrkomponentigen Harzsystem beträufelt wird oder mit dem mehrkomponentigen Harzsystem besprüht wird.

Vorteilhaft befindet sich der Körper auf einer Rollier-Station - siehe Figur 3.

In einer weiteren vorteilhaften Ausführungsform der Erfindung werden die erste Komponente und die zweite Komponente getrennt voneinander gefördert, wobei die erste Komponente und die zweite Komponente unmittelbar vor dem Tauchen oder vor dem Beträufeln oder vor dem Besprühen zum mehrkomponentigen Harzsystem vermischt werden. Durch Vermischen der beiden Harzkomponenten K1 und K2 entsteht dabei das Reaktivharz.

Unmittelbar bedeutet vorzugsweise: max. 10 min.

Durch die Rotation des Körpers wird ein Abtropfen des Harzsystems, insbesondere des Harzes, verhindert. Durch vorhandene Kapillarkräfte wird das Harz in die Wicklung, respektive die Nuten gezogen und geliert dort innerhalb weniger Minuten. Eine Tropffreiheit soll nach max. 20 min erreicht sein. Der Körper kann - ohne lange aushärten und/oder abkühlen zu müssen - von der Rollier-Station entnommen werden und weiterbearbeitet werden.

In einer weiteren vorteilhaften Ausführungsform der Erfindung weist das mehrkomponentige Harzsystem eine Viskosität von 300 mPa·s bei 25°C auf.

Diese Viskosität beschreibt eine Anfangsviskosität bei 25°C. Da der Körper auf 30 bis 80°C, insbesondere 30 bis 60°C erwärmt wurde, ist die tatsächliche Viskosität geringer.

In einer weiteren vorteilhaften Ausführungsform der Erfindung weist das mehrkomponentige Harzsystem nach einer Zeitspanne von 20 bis 30 min nach dem Auftreffen auf den Körper eine Viskosität von 15000 mPa·s auf.

In einer weiteren vorteilhaften Ausführungsform der Erfindung wird das mehrkomponentige Harzsystem zum Beträufeln als Strahl mit einer Dosierung zwischen 0,2 ml/s und 2 ml/s geformt.

Die genannte Dosierung ist vorteilhaft, da dadurch das Harzsystem optimal gefördert werden kann. Die genannte Dosierung ist zudem vorteilhaft, da dadurch das Harzsystem über Kapillarkräfte in die Wicklung gezogen wird. Gemäß der Erfindung wird das Statorblechpaket einerseits und die Wicklung andererseits über Gleichspannung auf jeweils gegenpolige Spannung gelegt, wodurch die sowieso schon herrschenden Kapillarkräfte durch elektrostatische Kapillarkräfte unterstützt werden, damit eine möglichst vollständige Füllung der Nut mit Imprägniermittel während des Verfahrens zur Imprägnierung erzielt wird.

In einer weiteren vorteilhaften Ausführungsform er Erfindung ist das mehrkomponentige Harzsystem bei einer Umgebungstemperatur von 15 bis 25 °C, insbesondere 20 bis 23 °C, nach weniger als 100 h, vorzugsweise weniger als 72 h, zu wenigstens 95%, vorzugsweise wenigstens 97%, ausgehärtet.

Das mehrkomponentige Harzsystem härtet vorzugsweise ohne den aktiven Eintrag von Wärme aus.

Bei Raumtemperatur ist das mehrkomponentige Harzsystem vorzugsweise nach 24 h zu min 97% ausgehärtet.

Im Folgenden wird die Erfindung noch anhand von 3 Figuren näher erläutert:
Figur 1 zeigt das Prinzip der Erzeugung von elektrostatischen Kapillarkräften in einem Reaktivharzbecken.
Figur 2 zeigt eine Ausführungsform der Erfindung, bei der das in Figur 1 gezeigte Prinzip auf eine mit Wicklung gefüllte Nut angewendet wird und
Figur 3 zeigt eine Ausführungsform der Erfindung, bei der das in Figur 1 gezeigte Prinzip auf einen rollierenden Stator angewendet wird.

Figur 1 zeigt das Prinzip der Erzeugung elektrostatischer Kapillarkräfte in einem flüssigen zwei-komponentigen Harzgemisch.

In Figur 1 ist ein Harzbecken 17 gezeigt, das bis zum Flüssigkeitsstand 8, beziehungsweise 9, mit dem Reaktivharz "K1+K2" gefüllt ist. In das Harzbecken 17 sind zwei Kondensatorplatten 1 und 3 getaucht, die gegenpolig über die beiden Anschlüsse 6 und 7 elektrisch angeschlossen sind. Dadurch bildet sich zwischen den beiden Platten 1 und 3 ein Kondensator aus, der das Reaktivharz "K1 +K2", das ein flüssiges Dielektrikum ist, zwischen sich, bis zum Flüssigkeitsstand 8, durch elektrostatische Kapillarkräfte gegen die Schwerkraft hoch saugt. Der Rest des Harzbeckens 17 ist nur auf niedrigerem Niveau, bis zum Flüssigkeitsstand 9, gefüllt.

Wie gezeigt, wird beim Anlegen der Spannung das Reaktivharz K1+K2 entgegen seiner eigenen Schwerkraft zwischen die Kondensatorplatten 1 und 3 gesogen, so dass der Kondensator seine eigene gespeicherte Energie physikalisch maximieren kann. Die Steighöhe 8 des Reaktivharzes K1+K2 ergibt sich aus dem Kräfteungleichgewicht der dielektrischen Kraft, welche größer ist als die eigene Gewichtskraft der Flüssigkeit mit einer Dichte von ca. 1g/cm³, beispielsweise.

Figur 2 zeigt eine Ausführungsform der Erfindung, bei der dieses Prinzip durch einfache Klemmanschlüsse 16 und 15 während des Verfahrens zur Imprägnierung realisiert ist. Hier sieht man, als Querschnitt, eine gefüllte Nut 30 im Statorblechpaket 14, einen Ausschnitt aus einem Statorblechpaket 14, entsprechend der äußersten Hülle 14, die an einen Plus-Pol (+) über beispielsweise eine Klemme 16 angeschlossen ist. Innerhalb dieses Statorblechpakets 14 befindet sich der mit Wicklung gefüllte Nutkasten 30, der an einen Minuspol(-) über eine weitere Klemme 15 angeschlossen ist. Anstelle der Kondensatorplatten werden hier das Statorblechpaket 14 einerseits und der gefüllte Nutkasten 30 andererseits jeweils gegenpolig über die Anschlüsse 16 und 15 mit Potential belegt. So entsteht zwischen dem gefüllten Nutkasten 30 und dem Blechpaket 14 ein Kondensatoraufbau, der zusätzlich zu den normal wirkenden Kapillarkräften einer Wicklung 22 noch eine elektrostatische Kapillarkraft zum Einsaugen des Reaktivharzes zwischen den gefüllten Nutkasten 30 und das Statorblechpaket 14 entwickelt, wenn das über die Klemmen 16,15 angeschlossene Statorblechpaket 14 im Ganzen in ein Harzbecken 17 getaucht wird.

Die Anschlüsse 16 und 15 können hier über Klemmen, aber auch über beliebige andere elektrische Kontakte realisiert sein. Zu erkennen sind in Figur 2 noch die runden Querschnitte der Leiter 20 einer im Nutkasten 30 befindlichen Wicklung 22, die Kupferdrähte 20, die mit Primärisolation 50 umgeben sind, umfasst. Der gewünschte Kondensatoraufbau findet hier zwischen den Leitern der Wicklung, die über 15 angeschlossen sind - in der Figur vereinfacht über den Nutkasten 30 dargestellt - einerseits und dem Blechpaket 14, das über 16 angeschlossen ist, andererseits statt.

Es wird bevorzugt über die elektrischen Kontakte 15, 16 Gleichspannung angelegt, so dass die Feldstärke im Bereich des Nutgrunds 30, also z.B. von der Kupferwicklung 22 zu Eisen des Statorblechpakets 14 beispielsweise 1000V/mm oder mehr beträgt. Der Abstand des Kupfers 20 zum Eisen/Blech 14 des Statorblechpakets 14 ist durch den Nutkasten 30 und einen Luftspalt gegeben. Beispielsweise beläuft sich der Abstand auf 200µm bis 700µm, insbesondere 300µm bis 500µm und bei größeren Maschinen bis zu 1mm. Dann ist jedenfalls eine Mindestspannung von 300V, insbesondere von 500V, zur Erzeugung einer ausreichenden elektrostatischen Kapillarkraft, die das Reaktivharz während der Imprägnierung in die Ritzen und Luftspalte saugt, erforderlich.

Die erforderliche Höhe der Spannung kann variieren, beispielsweise ist diese auch vom Fließverhalten des Reaktivharzes im Harzbecken 17 (in Figur 2 der Einfachheit halber nicht gezeigt) abhängig, insbesondere von dessen individueller Viskosität, die wiederum von den beiden Komponenten K1 und K2 abhängt, von der Temperatur und/oder dem Vernetzungsgrad.

Beispielsweise werden Spannungen von 1 bis 3 kV/mm bis zu 4kV/mm eingesetzt. Der Spannung sind nach oben hin - beispielsweise durch Auftreten von Teilentladungen - Grenzen gesetzt.

Die Figur 3 zeigt eine dynamoelektrische rotatorische Maschine 12 während des Imprägnierverfahrens.

Dabei wird eine weitere Ausführungsform der Erfindung gezeigt, durch die auch hier, wo eine einfache elektrische Kontaktierung der Drähte der Wicklung innerhalb des Nutkastens mittels Klemmen nicht möglich ist, ein Kondensatoraufbau realisierbar ist. Bei dieser Ausführungsform, die auch aus der noch unveröffentlichten Anmeldung EP20159310 her bekannt ist, wird beispielsweise ein Schleifkontakt 72 realisiert.

Die Figur 3 zeigt einen Stator 70 und einen Rotor 71. Anstelle eines Harzbeckens trifft durch die Düse 5 das mehrkomponentige Reaktivharz 10, umfassend z.B. K1 und K2, auf den Stator 70, während der Stator 70 in Rotationsrichtung R um die Achse A rotiert.

In der Figur 3 sind als Schleifkontakt 72 Kohlebürsten angedeutet. Bevorzugt gehen die über das komplette Blechpaket, da die Bleche untereinander isoliert sind.

Die Bürsten 72 kontaktieren das Statorblechpaket 70, während der Rotation und Imprägnierung. Als Gegenpol dient dann die Kupferwicklung an sich.

Das so erzeugte elektrische Feld bewirkt eine Kraft, die das flüssige Reaktivharz in die sonst mit Luft gefüllten Nutbereiche zieht. Diese wirkt zusätzlich zu den hier bei dem rollierenden Imprägnieren wirkenden Kapillarkräften, beide Kräfte addieren sich zu einer resultierenden Gesamtkraft, welche die Flüssigharze durch die Nut zieht.

Durch die durch Erzeugen eines Kondensator-Potentials zusätzliche Kraft - hier elektrostatische Kapillarkraft genannt - wird die Fließgeschwindigkeit des flüssigen Reaktivharzes beschleunigt, womit die Taktzeit beim Imprägnieren, beispielsweise beim Beträufeln, reduzierbar ist. Damit wird eine kosteneffizientere, qualitativ höhere und noch besser reproduzierbare Imprägnierung bei einem ansonsten gleichbleibendem Fertigungsaufbau möglich. Bislang war keine Technik verfügbar, mit der die Fließgeschwindigkeit des Reaktivharzes so unbelastend für das restliche System beeinflusst werden konnte.

Die Erfindung eröffnet erstmals eine Möglichkeit zur Erhöhung der Fließgeschwindigkeit eines Reaktivharzes während der Imprägnierung, ohne durch chemische Zusätze die Viskosität, die Toxizität und/oder durch Temperaturerhöhung die Vernetzung und/oder durch Druckerhöhung die Volatilität des Gesamtsystems nachteilig zu beeinflussen. Vielmehr werden genau die Eigenschaften des Systems, elektrische Leitfähigkeit der umgebenden Gehäuse und Dielektrizität des Reaktivharzes hier gewinnbringend im Sinne des Imprägnierverfahrens eingesetzt, ohne fertigungstechnische Nachteile dabei in Kauf nehmen zu müssen.

## Patentansprüche

1. Vorrichtung zum Imprägnieren, Verfestigen oder Elektroisolieren eines ein- oder mehrlagige Wicklungen tragenden Körpers, wobei Gleichspannung zwischen Wicklung und Körper angelegt ist, so dass der die Wicklungen tragende Körper einerseits und die Wicklungen andererseits wie die beiden Elektroden eines Kondensators fungieren und ein flüssiges Dielektrikum ansaugen.

2. Vorrichtung nach Anspruch 1, wobei die Gleichspannung durch elektrische Kontakte angelegt ist.

3. Vorrichtung nach Anspruch 1 oder 2, wobei zumindest ein elektrischer Kontakt eine Klemme ist.

4. Vorrichtung nach einem der vorstehenden Ansprüche, wobei zumindest ein elektrischer Kontakt ein Schleifkontakt ist.

5. Vorrichtung nach Anspruch 4, wobei der Schleifkontakt eine Kohlebürste ist.

6. Verfahren zum Imprägnieren einer ein- oder mehrlagige Wicklungen tragenden Körpers einer elektrischen Maschine, wobei der Wicklungen tragende Körper in ein mehrkomponentiges Reaktivharzbecken getaucht wird oder mit dem mehrkomponentigen Reaktivharz beträufelt oder besprüht wird, wobei zwischen den Wicklungen und dem die Wicklungen tragenden Körper während des Imprägnierens eine Gleichspannung derart angelegt wird, dass zumindest 300V/mm dazwischen liegen.

7. Verfahren nach Anspruch 6, bei dem eine Gleichspannung von zumindest 500V/mm angelegt wird.

8. Verfahren nach Anspruch 6, bei dem eine Gleichspannung von zumindest 700V/mm angelegt wird.

9. Verfahren nach Anspruch 6, bei dem eine Gleichspannung von zumindest 1000V/mm angelegt wird.

10. Verfahren nach Anspruch 6, bei dem eine Gleichspannung von zumindest 2000V/mm angelegt wird.

11. Verfahren nach Anspruch 6, bei dem eine Gleichspannung im Bereich von 2100V/mm bis 4000V/mm angelegt wird.

12. Elektrische Maschine imprägniert nach einem Verfahren nach einem der vorhergehenden Ansprüche.

13. Elektrische Maschine nach Anspruch 12, die ein Motor ist.

14. Elektrische Maschine nach Anspruch 12, die ein Generator ist.

15. Elektrische Maschine nach Anspruch 12, die ein Transformator ist.
